# EUROPEAN PATENT SPECIFICATION

(11) **EP 1 748 308 B1**
(45) Date of publication and mention of the grant of the patent: **06.06.2012**
(21) Application number: 06014595.0
(22) Date of filing: 13.07.2006
(51) Int. Cl.: G02B 26/10, G02B 7/182, G02B 26/12, G02B 27/62

(54) **Optical scanning device, image forming apparatus, and method for assembling an optical scanning device**
Optisches Abtastgerät, Bilderzeugungsapparat und Montageverfahren für ein optisches Abtastgerät
Dispositif optique de balayage, appareil de formation d'image et procédé d'assemblage d'un dispositif optique de balayage

(30) Priority: 29.07.2005 JP 2005220602
(43) Date of publication of application: 31.01.2007
(73) Proprietor: Ricoh Company, Ltd., Tokyo 143-8555 (JP)
(72) Inventor: Kusunose, Noboru, Yokohama-shi Kanagawa-ken (JP)
(74) Representative: Schwabe - Sandmair - Marx

(56) References cited:
- JP-A- 10 039 242
- JP-A- 2002 267 984
- US-A- 4 571 028
- US-B1- 6 358 769
- US-B1- 6 458 513

## Description

### Technical Field

The present invention relates to a (long) reflection mirror that deviates an optical beam for scanning use, an optical scanning device that includes a supporting member supporting the reflection mirror, a method for assembling the optical scanning device, and image forming apparatus that includes the optical scanning device.

### Background Art

In an image forming apparatus, such as a laser beam printer, a copier, etc., there is provided an optical scanning device to form a latent image on a photoconductive member as an optical writing device. In such an optical scanning device, a laser light emitted from a light source is deflected and reflected by a polygon mirror toward a photoconductive member while a light passage is deviated by a reflection mirror. Thus, the closer to the photoconductive member the write beam approaches, the larger the write width. Therefore, the reflection mirror correspondingly becomes longer.

Accordingly, unless the reflection mirror is precisely secured, optical scanning is affected, and accordingly, a quality of image formation is deteriorated as a result. Then, various attempts have been made in the past.

For example, as discussed in Japanese Patent Application Laid Open No. 11-326808, a holding section holding a reflection mirror is disposed at one of both end and middle portions of the reflection mirror in the longitudinal direction. A pressure contact member is provided to pressure contact the reflection mirror to the holding section.

Further, as discussed in Japanese Patent Application Laid Open No. 11-149033, a pair of guiding devices is provided to secure a reflection mirror to a frame at its both ends while supporting the mirror surface. The surface of one of the guidance devices is inclined in a widthwise direction (i.e., a short length direction) perpendicular to a longitudinal direction of the mirror surface.

Japanese Patent Application Laid Open No. 10-221627 discusses that more than three supporting members secure a reflection mirror to a frame.

Further, as discussed in Japanese Patent Application Laid Open No. 2002-267984, a plurality of supporting members are provided to support the reflection mirror at its both end and middle portions in the longitudinal direction. A plurality of pressure contacting members are also provided to pressure contact a plurality of supporting sections of the supporting members from an opposite side of the reflection surface of the reflection mirror. A plurality of pressure contacting sections of the pressure contacting members are aligned between these supporting sections of the both end and middle supporting members.

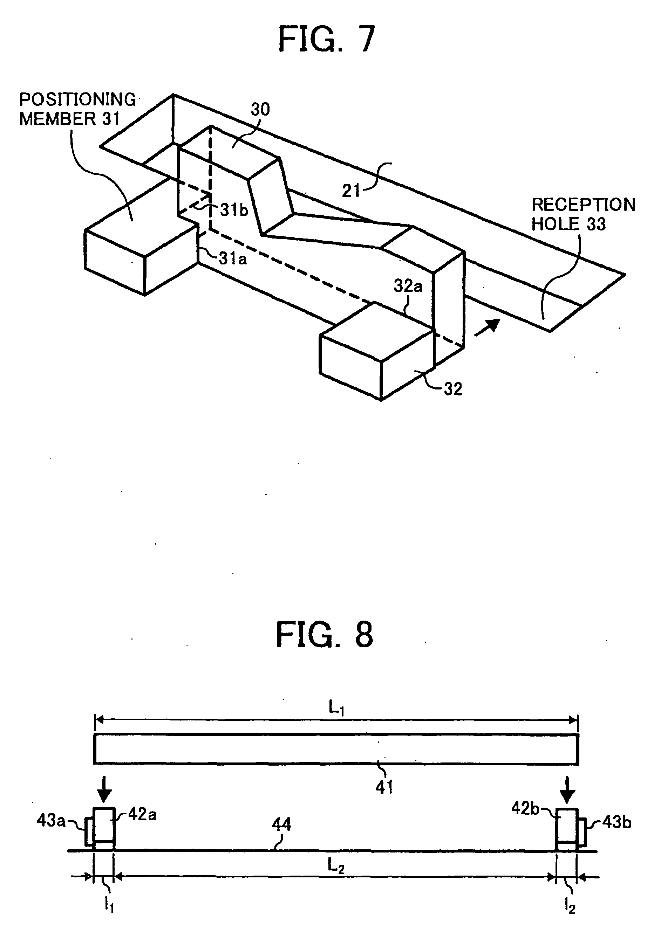

FIG. 8 illustrates a conventional positional relation between a reflection mirror and a guidance portion, wherein 41 denotes a reflection mirror, 42a and 42b denote a pair of holding members that hold both ends of the reflection mirror. 43a and 43b denote stoppers that prevent a sideward movement of the reflection mirror. 44 denotes a housing that supports the holding members 42a and 42b.

As shown, the below described inequality is established, when a length of the reflection mirror 41 is L₁, respective widths of the holding members 42a and 42b of the reflection mirror 41 are l₁ and l₂, and a pitch between the holding members 42a and 42b is L₂:
l₁ + l₂ + L₂ > L₁,
l₁ l₂ = 3 to 10mm,
L₂ > l₁, l₂.
First patent literature: Japanese Patent Application Laid Open NO.11-326808
Second patent literature: Japanese Patent Application Laid Open NO.11-149033
Third patent literature: Japanese Patent Application Laid Open NO.10-221627
Fourth patent literature: Japanese Patent Application Laid Open NO.2002-267984

### DISCLOSURE OF THE INVENTION

### PROBLEMS TO BE RESOLVED BY THE PRESENT INVENTION

In the above-mentioned prior arts, the configuration of FIG. 8 causes the reflection mirror 41 to erroneously drop and is likely damaged in the housing 44 when the reflection mirror 41 is set to the holding members 42a and 42b, because of a narrow width of the holding members 42a and 42b. When the width of the mirror holding section of the holding members 42a and 42b are increased to resolve such a problem, a precision of the holding sections become worse by an amount of the increased width, or a valid range of the reflection mirror 41 undesirably becomes narrower.

Since the reflection mirror is supported at the both end and middle portions in the longitudinal direction in the Japanese Patent Application Laid Open Nos. 11-326808 and 10-221628, the reflection mirror is unlikely stably positioned in the direction.

Further, when the reflection mirror is forcibly secured at these portions, the reflection mirror is bent at the middle supporting section, and thereby an image expands or is not in focus there.

With the prior art of Japanese Patent Application Laid Open No. 11-149033, the similar result is obtained to when the supporting section of the reflection mirror is wider. However, a valid width of the reflection mirror decreases, and the width of the reflection mirror is necessarily increased, correspondingly, and is disadvantageous in view of cost.

Further, with the prior art of Japanese Patent Application Laid Open No. 2002-267984, wherein a housing is partially cut away to lead in a light, the housing tends to be deformed due to the structural partial cut away section, and a positional precision of the reflection mirror is hardly obtained. Further, since a section other than the mirror supporting sections is pressure contacted, a posture of the reflection mirror and a traveling direction of the light become unstable.

JP 10-039242 A relates to a scanning optical device. The turn back mirror turning back the scanning light of a rotary polygon mirror toward a rotary drum is built into the mirror supporting body of an optical box with a spring being integrated to a lid member. The return back mirror is carried in the optical box by being temporarily held in a mirror holder being integrated to the lid member and the lid member is screwingly fixed to the optical box in a state in which the turn back mirror is pressurized with the spring.

It is a general object of the present invention to provide an improved and useful method of assembling an optical scanning device in which the above-mentioned problems are eliminated.

In order to achieve the above-mentioned object, there is provided a method of assembling an optical scanning device according to claim 1.

Advantageous embodiments are defined by the dependent claims.

### ADVANTAGES

Advantageously, the reflecting mirror is preferably a long reflection mirror. Advantageously, method of assembling an optical scanning device temporarily supports a (long) reflection mirror on a temporary supporting member with a surface opposite to a beam reflection surface of the (long) reflection mirror contacting the temporary supporting member, pushing the (long) reflection mirror toward a pair of holding members from the temporary supporting member, and sets the beam reflection surface of the (long) reflection mirror to the pair of holding members at its both ends in the longitudinal direction.

Advantageously, by temporarily supporting and setting a reflection mirror with a temporary supporting member, the reflection mirror is not erroneously dropped during setting thereof, thus the reflection mirror is neither broken nor cut away. Thus, an operator can stably maintain it even if parting a hand therefrom, thereby readily executing operation.

Further, since the reflection mirror does not receive pressure contact force, an image is formed maintaining polish precision of the mirror during light scanning. Specifically, quality deterioration, such as partial expansion, partial reduction, blur, etc., can be suppressed. Further, since a width of the holding section of the holding member can be the same to that of the conventional, and is not necessarily extended, a device can be economy.

Advantageously, a gap is formed between the (long) reflection mirror and the temporary supporting member when the beam reflection surface is set to the pair of holding members in the method of assembling an optical scanning device. Thus, since the reflection mirror does not receive pressure contact force, an image is formed by light scanning maintaining polish precision of the mirror. Specifically, quality deterioration, such as partial expansion, partial reduction, blur, etc., can be suppressed.

Advantageously, the (long) reflection mirror is held with the beam reflection surface pressure contacting the pair of holding members. With this method, the reflection mirror can be continuously held in a prescribed state.

Advantageously, the temporary supporting member integrally protrudes from a housing.

Advantageously, the temporary supporting member separated from the housing is positioned at the housing of the optical scanning device before the (long) reflection mirror is set. Thus, by molding the housing while excluding the temporary supporting member as an isolated member, precision of the housing is not decreased and preferable housing can be molded even if the temporary supporting member is installed.

Advantageously, the temporary supporting member is moved in a reception hole formed on the housing from the setting position of the housing, and the temporary supporting member is disposed through the reception hole after the beam reflection surface has been set to the pair of holding members in claim 5. Thus, unnecessary temporary supporting member can be removed after completion of setting, and a problem caused by existence of the reflection member can be prevented.

Advantageously, an optical scanning device includes a (long) reflection mirror that deviates a scanning use light beam, holding members that support the (long) reflection mirror at both ends of its reflection surface in a longitudinal direction, and a temporary supporting member positioned between the holding members to temporary support the long reflection mirror by contacting the opposite side of the beam reflection surface before the reflection mirror is set to the holding members. The temporary supporting member is separated from the long reflection mirror when the long reflection mirror pressure contacts the holding members.

By temporarily supporting and setting a reflection mirror with a temporary supporting member in this configuration and, the reflection mirror is not erroneously dropped during setting thereof, thus the reflection mirror is neither broken nor cut away. Thus, an operator can stably maintain it even if parting a hand therefrom, thereby readily executing an operation. Further, since the reflection mirror does not receive pressure contact force, an image is formed maintaining polish precision of the mirror during light scanning. Specifically, quality deterioration, such as partial expansion, partial reduction, blur, etc., can be suppressed. Further, since a width of the holding section of the holding member can be the same to that of the conventional, and is not necessarily extended, a device can be economy.

Advantageously, a gap is formed between the (long) reflection mirror and the temporary supporting member when the (long) reflection mirror is set in the device. Thus, a load is not applied to and the reflection mirror is not bent after completion of setting. Further, quality deterioration such as partial expansion, partial reduction, blur, etc., can be suppressed.

Further, when the reflection mirror slides to be set, the reflection surface is not damaged and setting can be readily executed, because a gap is formed all the time.

Advantageously, a cross section of the temporary supporting member has a similar shape to that of a reception portion of the pair of holding member for receiving the (long) reflection mirror when the long reflection mirror is set to the pair of holding members 22, 23 in the device. Thus, the reflection mirror readily pressure contacts the (temporary) holding member, because a work operation can be started from a presetting posture of the reflection mirror with its being temporarily supported by the temporary supporting member. Further, the operator can work without picking the reflection mirror with both hands. Thus, adhesion of stein, such as a fingerprint, etc., to the reflection surface decreases.

Advantageously, the temporary supporting member includes an inclination surface contacting and inclining the long reflection mirror at a deviation angle of a scanning use light beam in the optical scanning device. Thus, The reflection mirror is readily set to a preset posture.

Advantageously, an elastic member contacts the surface opposite to the beam reflection surface of the long reflection mirror and bias the long reflection mirror toward the holding members 22, 23 in the optical scanning device. Thus, the reflection mirror can be continuously held in a prescribed state.

Advantageously, the temporary supporting member and the housing are integral in the optical scanning device.

Advantageously, the temporary supporting member is made by a different member from the housing, and the housing includes a positioning member that positions the temporary supporting member at a setting position of the housing in the optical scanning device. Thus, precision of the housing is not decreased and a housing can be preferably molded while excluding the temporary supporting member as a separate member, even if the temporary supporting member is installed.

Advantageously, a reception hole is formed on the housing for allowing the temporary supporting member to enter from the setting position when the temporary supporting member is set to the holding members in the optical scanning device.

Advantageously, in an image forming apparatus an optical scanning device forms a latent image to be developed on a photo-conductive member, a sheet feeding device feeds a transfer sheet to the photoconductive member, and a transfer device transfers the developed image onto the sheet in the image forming apparatus. Further, the optical scanning device employed in the image forming apparatus is constituted to be the optical scanning device. Thus, because the above-mentioned optical scanning device having the above-mentioned significant advantages is mounted, a fine image can be obtained while avoiding deterioration of image quality.

### BRIEF DESCRIPTION OF DRAWINGS:

FIG. 1 illustrates an exemplary color image forming apparatus that employs an optical scanning device that includes the first and second imaging optical units;
FIG. 2 illustrates an exemplary optical system of the optical scanning device according to one embodiment of the present invention;
FIG. 3 illustrates an exemplary mirror supporting structure that supports a reflection mirror 4 used in the first embodiment of the present invention;
FIG. 4 illustrates a front view of the mirror supporting structure of FIG. 3;
FIG. 5 illustrates a side view of the mirror supporting structure of FIG. 3;
FIG. 6 illustrates a cross sectional view of a Z-Z section in the mirror supporting structure of FIG. 4;
FIG. 7 illustrates another exemplary mirror supporting structure that supports a reflection mirror 4 used in the second embodiment of the present invention; and
FIG. 8 illustrates a positional relation between a conventional reflection mirror and a guidance portion.

### DESCRIPTION OF REFERENCES:

4, 4a to 4d: Reflection mirror
4e: Top view of reflection mirror
4f: End of reflection mirror
4g: surface opposite to surface 4e.
16a, 16b: Laser light generation apparatus
21: Housing
22,23: Holding member
22a, 23a: Inner lower side surface of holding member
24,30: Temporary supporting member
24a: Surface of temporary supporting member opposing reflection mirror
25: Elastic member
25a: Free end
25b: Secured end
25c: Stopper section
31,32: Positioning member
31a, 31b, and 32a: Pressure contact reference surface
33: Reception hole
D1, D2: Gap

### FURTHER ADVANTAGE OF THE INVENTION

Advantageously, by temporarily supporting and setting a reflection mirror with a temporary supporting member, the reflection mirror does not erroneously drop during setting thereof, thus the reflection mirror is not broken, or cut away. Thus, an operator can stably maintain it even if parting a hand therefrom, thereby readily executing an operation. Further, since the reflection mirror does not receive pressure contact force, an image is formed maintaining polish precision of the mirror during light scanning. Specifically, quality deterioration such as partial expansion, partial reduction, blur, etc., can be suppressed. Further, since a width of the holding section of the holding member can be the same to that of the conventional, and is not necessarily extended, a device can be economy.

### EMBODIMENTS OF THE INVENTION

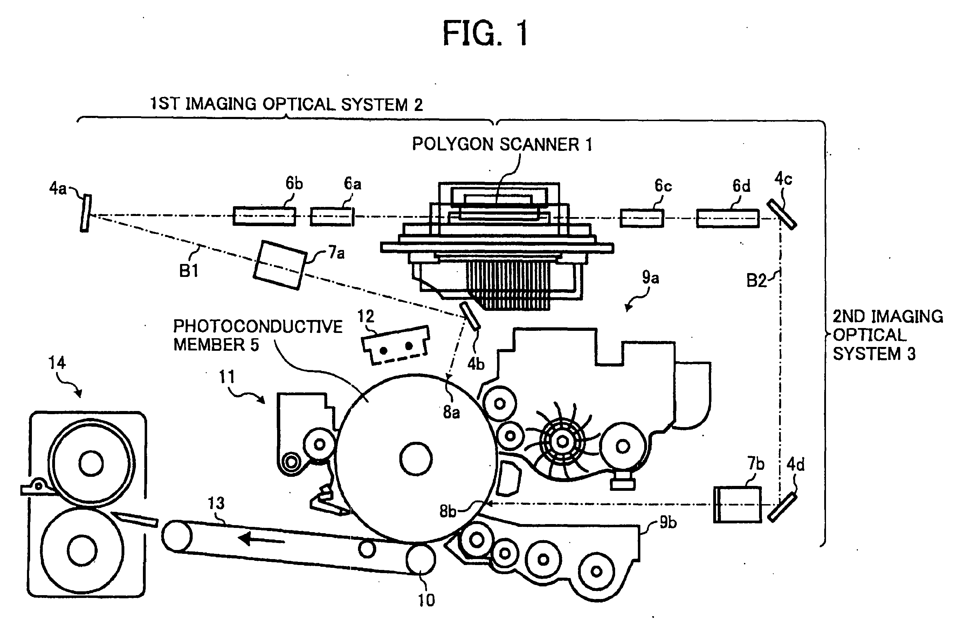

Herein below, various embodiments are described with reference to several drawings. In FIG. 1, an exemplary color image forming apparatus that employs an optical scanning device that includes the first and second imaging optical units is illustrated.

As shown (in FIG. 1), 1 denotes a polygon scanner serving as a rotational multiple mirrors, 2 and 3 denote a pair of first and second imaging optical units. 4a to 4d denote a reflection mirrors, 5 denotes a drum shape photoconductive member serving as an image bearer, 6a to 6d denote f-theta lenses, and, 7a and 7b denote lateral type toroidal lens included in respective first and second imaging optical units 2 and 3. As peripherals of the photoconductive member 5, 8a and 8b denote exposure sections, 9a and 9b denote developing devices corresponding to respective colors. 10 denotes a transfer section, 11, a cleaning section, 12, a charge section, 13, a conveyance belt, and 14, a fixing section, respectively.

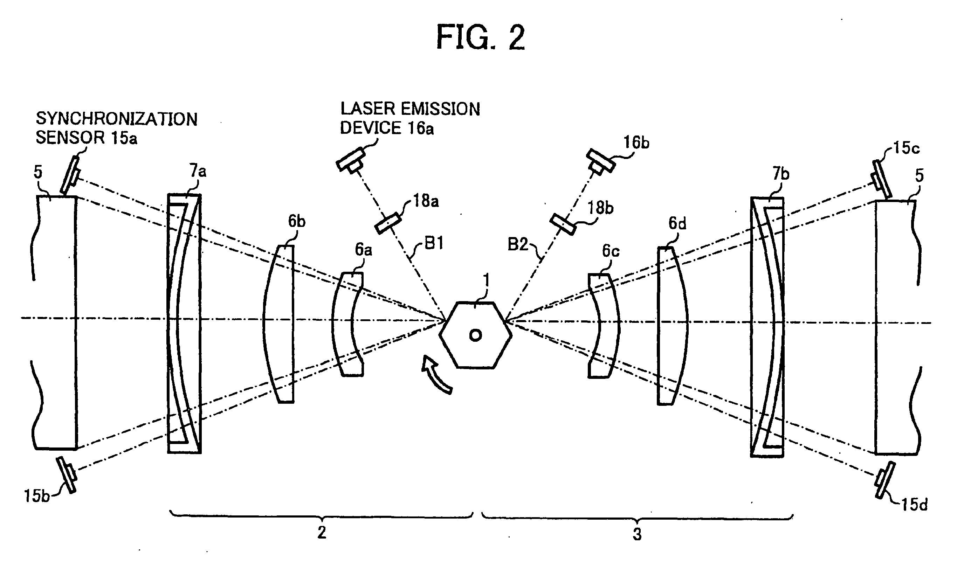

FIG. 2 is a partial plan view and illustrates an exemplary optical system of the optical scanning device according to one embodiment. As shown, an optically equivalent positional relation of structural parts arranged between the polygon scanner 1 and the pair of imaging optical units 2 and 3 is illustrated excluding the reflection mirrors 4a to 4d of Fig. 1.

In FIG. 2, the polygon scanner 1 is supposed to rotate in a direction as shown by an arrow. The first imaging optical unit 2 includes a pair of synchronization detection sensors 15a and 15b at scan start and end terminals, and employs a dual-point synchronization system. The second imaging optical unit 3 similarly includes a pair of synchronization detection sensors 15c and 15d at scan start and end terminals, and employs a dual-point synchronization system.

The first and second laser emission devices 16a and 16b each including a LD (e.g. a semiconductor laser) are arranged as light sources to emit laser beams toward respective mirror surfaces of the polygon mirror 1 beside the polygon scanner 1. The polygon scanner 1 rotates in a direction so as to cause laser beams emitted from the first and second laser emission devices 16a and 16b to scan the surface of the photoconductive member 5 in a main scanning direction. The photoconductive member 5 rotates in a sub scanning direction perpendicular to the main scanning direction.

The first and second laser emission devices 16a and 16b are activated in response to image data transmitted from an image data input apparatus, not shown. As shown in FIGS. 1 and 2, the first beam B1 emitted from the first laser emission device 16a passes through a cylindrical lens 18a, and is deflected by the polygon scanner 1 in an optical writing apparatus including such first and second laser emission devices. Then, the first beam B1 advances through the f-theta lenses 6a and 6b. The first laser beam B1 is reflected by the reflection mirror 4a, and passes through the toroidal lens 7a. The first beam B1 is then reflected by the reflection mirror 4b, thereby scanning the photoconductive member 5.

Further (On the other hand), the second beam B2 emitted from the second laser emission device 16b passes through a cylindrical lens 18b, and is deflected by the polygon scanner 1. The second beam B2 then advances through the f-theta lenses 6c and 6d. The second laser beam B2 is reflected by the reflection mirrors 4c and 4d, and passes through the toroidal lens 7b, thereby scanning the photoconductive member 5. The first and second beams B1 and B2 are inversely scanned with each other in the main scanning direction by the rotation of the polygon mirror 1.

In this way, latent images are formed on the surface of the photoconductive member 5 in respective colors by simultaneously swinging the beams B1 and B2 emitted from the first and second laser emission devices 16a and 16b in the main scanning direction by means of the polygon scanner 1, while exposing the photoconductive member 5 rotating in the sub scanning direction at the exposure sections 8a and 8b.

The developing devices 9a and 9b causes different color toner particles to adhere to the latent images on the surface of the photoconductive member 5, thereby visualizing those as toner images, respectively. The respective toner images are superimposed on a transfer sheet, not shown, at the transfer section 10. The transfer sheet is conveyed by the conveyance belt 13 toward a sheet ejection side as shown by an arrow, and is subjected to heat and pressure at the fixing section 14. With a fixing processing, the toner image is fixed onto the transfer sheet, thereby a multiple color image is formed thereon.

In FIG. 1, the surface of the photoconductive member 5 is uniformly charged at the charge section 12 before exposure. The cleaning section 11 removes and collects toner remaining on the surface after such transfer process.

Now (next), a configuration relative to the reflection mirror according to one embodiment is described.

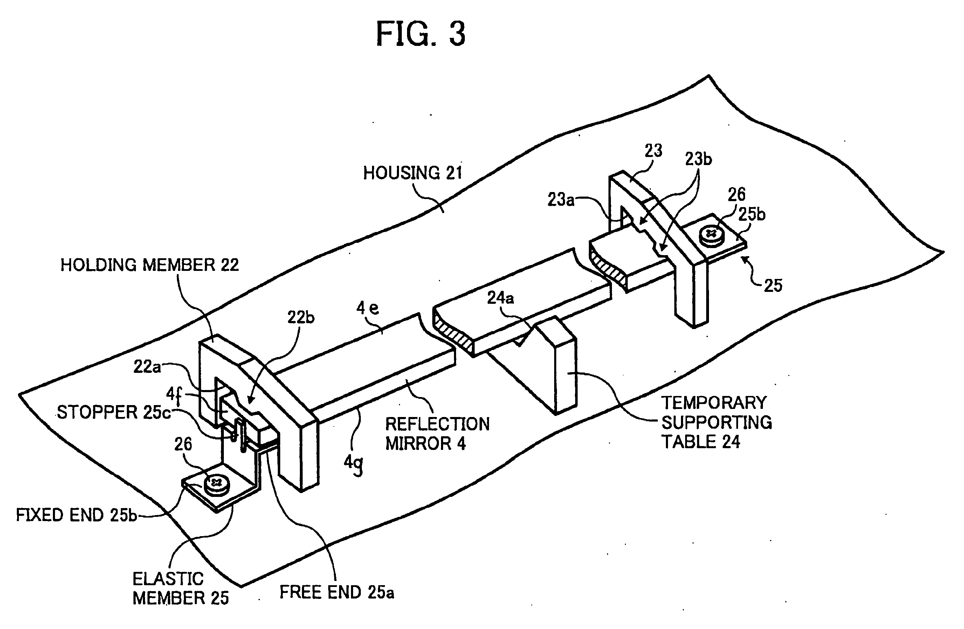

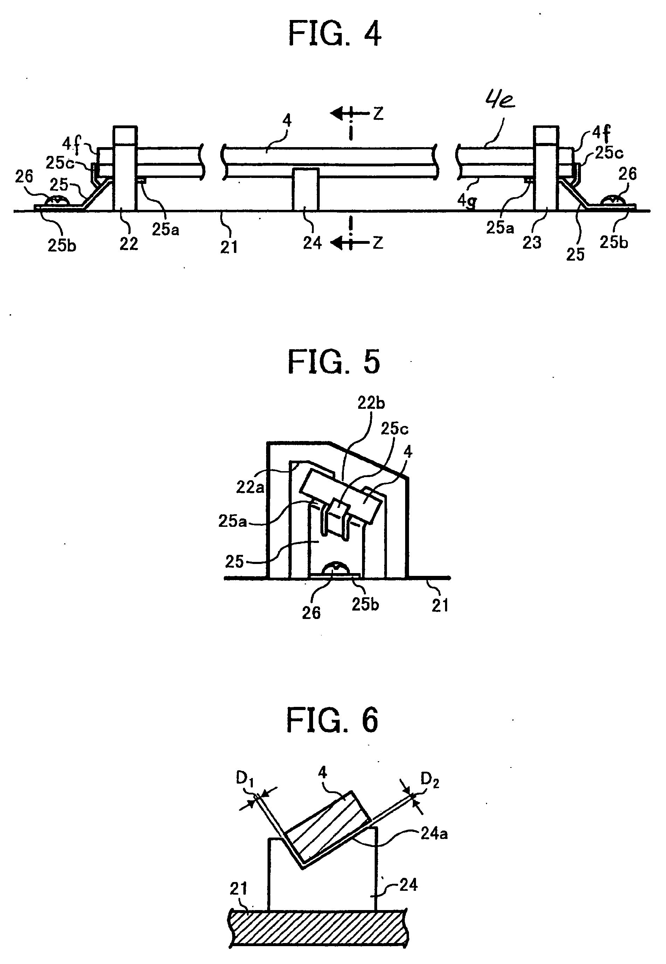

FIG. 3 illustrates an exemplary mirror supporting structure that supports a reflection mirror 4 in the first embodiment. FIG. 4 illustrates an exemplary front view of the mirror supporting structure of FIG. 3. FIG. 5 illustrates an exemplary side view of the mirror supporting structure of FIG. 3. FIG. 6 illustrates a sectional view in a Z-Z cross section of the mirror supporting structure shown in FIG. 4.

As shown in FIGS. 3 to 6, 21 denotes a housing that holds and secures a constructional member of the optical unit of FIGS. 1 and 2. 22 and 23 denote a pair of holding members having a reverse concave shape that holds both ends of the long reflection mirror 4 in the longitudinal direction. 24 denotes a temporary supporting table protruding from the housing at least at an about middle of a section where the reflection mirror 4 is to be arranged. 25 denotes a pair of elastic members elastically contacts the both ends of the reflection mirror 4 though their free ends 25a, respectively. 26 denotes a screw that secures a fixing end 25b of the elastic member 25 to the housing 21.

The above-mentioned holding members 22 and 23 are arranged in pairs in the housing 21. The inner lower surfaces 22a and 23a contact an upper surface 4e (i.e., a beam reflection surface) of the reflection mirror 4. A supporting length of the reflection mirror 4 is adjusted and set so that its inherent frequency does not match with a meshing frequency or a rotational frequency created by a driving motor or a polygon motor installed in the apparatus.

The inner lower surfaces 22a and 23a of the holding members 22 and 23 are inclined at a reflection angle of an optical beam reflected by the reflection mirror 4. A protrusion 22b is arranged on the inner side surface 22a of the holding member almost at a middle portion in a direction (e.g. a widthwise direction) perpendicular to the longitudinal direction of the reflection mirror 4. A pair of protrusions 23b are formed on sections on the inner side surface 23a of the other holding member 23 in the widthwise direction of the reflection mirror 4. Thereby, the reflection mirror 4 is stably supported at three points.

The elastic member 25 is formed from a plate spring member, and includes a free end inclining at an optical beam reflection angle of the reflection mirror 4 to serve as a mirror holding section. A stopper section 25c integrally protrudes from a section of the free end 25a to contact an end surface 4b of the reflection mirror 4 in order to limit movement of the reflection mirror 4 in the longitudinal direction.

As shown in FIG. 6, the surface 24a of the temporary supporting table opposing the reflection mirror 4 is inclined at the same angle as the inner lower surfaces 22a and 22b of the holding members 22 and 23.

Next, a manner of assembling a reflection mirror 4 is described.

The temporary supporting table 24 can be arranged every sections between the holding members 22 and 23. A width of the temporary supporting table 24 is determined not to incline the reflection mirror 4. However, when a large width version is unavailable, a plurality of temporary supporting tables 24 can be used so as to avoid inclination or dropping of the reflection mirror 4.

A mirror assembling operation is executed in the below-described manner. Initially, the reflection mirror 4 passes through the inner lower surface of the holding member 22 while being mounted on the temporary supporting table 24. When the reflection mirror 4 passes through the holding member 22, the reflection mirror 4 passes through the inner lower surface of the holding member 23. A different order of passing can be employed. During this assembly, since the temporary supporting table 24 holds the reflection mirror 4, the reflection mirror 4 does not drop even if an operator does not manually support the reflection mirror 4.

In assembly, the reflection mirror 4 is set to create gaps D1 and D2 between the temporary supporting table 24 and the reflection mirror 4 when the assembly is completed. The gaps D1 and D2 are set to be more than 0.1mm and less than 10mm so that the reflection mirror 4 does not contact the protrusions 22b and 23b of the holding members as illustrated in FIG. 6. Further, the surface 24a opposing the reflection mirror 4 as a mirror holding section of the temporary supporting table 24 has a similar shape to that formed in the reflection mirror 4 set as mentioned above. Thus, a temporary setting posture is created, and the subsequent operations are smoothly executed while maintaining the same posture of the reflection mirror 4.

After the reflection mirror 4 is temporarily set as mentioned above, the free end 25a of the elastic member 25 is externally inserted to a portion beneath the surface 4g opposite to the upper side surface 4e (i.e., a beam reflection surface) of the reflection mirror 4. The fixing end 25b of the elastic member 25 is fixed to the housing with the screw 26 when the stopper section 25c of the elastic member 25 contacts the end surface 4f. In this situation, the elastic member 25 upwardly applies a prescribed amount of pressure to the reflection mirror 4. The prescribed amount of pressure neither causes the reflection mirror 4 to bend because of weight nor deviates from the prescribed position due to vibration or the like.

Accordingly, the operator does not drop the reflection mirror 4 during setting in this embodiment, even if he or she temporarily sets and holds the reflection mirror 4 using the temporary supporting table 24. As a result, the reflection mirror 4 is not broken nor cut away even if he or she touches off the reflection mirror 4, thereby the operator can easily execute his or her operation while stably maintaining the reflection mirror 4.

Further, since an unreasonable pressure is not applied to the reflection mirror 4, an image is formed by optical scanning while maintaining an advantage of a mirror grinding precision, and accordingly, image quality deterioration, such as partial expansion, partial reduction, blur, etc., can be suppressed. Further, since the width of the holding sections of the holding members 22 and 23 can be equivalent to conventional holding members, mirror width is not necessarily expanded, thereby result in economy.

Even though the temporary supporting table 24 is integrally formed with the housing 21 in the first embodiment, the temporary supporting table 24 can be separated and detached to the housing 21.

FIG. 7 illustrates an exemplary mirror supporting mechanism that supports a reflection mirror 4 as the second embodiment, wherein the temporary supporting table 30 is formed from a different member from that of the housing 21. A shape or the like of the temporary supporting table 30 is similarly designed to that 24 of the first embodiment.

In FIG. 7, 31 and 32 denote block state positioning members 31 arranged protruding from the housing 21. One of the block state positioning members 31 has a L-shape cross section having pressure contact reference surfaces 31a and 31b in the longitudinal and short length directions of the reflection mirror 4. Another block state positioning member 32 has a pressure contact reference surface 32a in the longitudinal direction of the reflection mirror 4. 33 denotes a reception hole formed on the housing 21 to remove the temporary supporting table 30.

The positioning members 31 and 32 are smaller in height than the temporary supporting table 30. The temporary supporting table 30 is set before assembly of the reflection mirror 4. Specifically, one side surfaces 30a and 30b of the temporary supporting table 30 pressure contact the pressure contact reference surfaces 31a and 32a, and 31b of the reflection mirror 4 in the longitudinal and short length directions, respectively. In this pressure contact situation, the temporary supporting table 30 becomes the same installation condition to that 30 of the first embodiment as shown in FIGS. 5 and 6.

As a positioning reference for the temporary supporting table 30, a reference hole or a reference pin can be formed on the housing 21.

In the second embodiment, after positioning and setting the temporary supporting table 30 to the housing 21 by means of the positioning members 31 and 32, the reflection mirror 4 is assembled as executed in the first embodiment. After completing the setting operation of the reflection mirror 4, the temporary supporting table 30 is moved in a direction shown by an arrow, and is dropped into the reception hole 33. Thus, the temporary supporting table 30 is ejected from the housing 21.

The reception hole is set to have a prescribed depth so that the temporary supporting table 30 does not contact the reflection mirror 4 when it is set. When the reception hole 33 is formed to allow insertion of the temporary supporting table 30 while penetrating the housing 21, the temporary supporting table 30 can be withdrawn from the housing 21.

### INDUSTRIAL USAGE:

The present invention is applied to an optical scanning apparatus using a long reflection mirror that deviates a scanning use light beam. In particular, it is preferably employed in an optical scanning apparatus in that a reflection mirror can be set to a prescribed position readily and credibly without increasing an area for receiving a holding member while avoiding application of unreasonable force to the reflection mirror when the reflection mirror is set to the holding member.

A reflection mirror is readily and credibly set to a prescribed position while maintaining a small area of a holding member for holding the reflection mirror without creating unreasonable force.

A reflection mirror 4 is positioned below an inner lower side of one of holding members 22 while it is positioned below an inner lower side of the other one of the holding members 22 to be temporarily set. A free end 25a of an elastic member 25 is external inserted below a surface 4g opposite to an upper side surface 4e as a reflection section of the reflection mirror 4 during its temporal setting. A securing end 25b of the elastic member 25 is screwed by a screw 26 to a housing 21 with its stopper section 25c contacting an end 4f of the reflection mirror 4.

## Claims

1. A method of assembling an optical scanning device, comprising the following steps:
arranging a pair of holding members (22, 23) in a housing (21) of the optical scanning device;
arranging a temporary supporting member (24) on the bottom of the housing between the pair of holding members (22, 23);
temporarily supporting a reflection mirror (4) on the temporary supporting member (24; 30);
pushing the reflection mirror (4) upwardly toward the pair of holding members (22, 23) from the temporary supporting member (24; 30);
and
setting the beam reflection surface (4e) of the reflection mirror (4) to the pair of holding members (22, 23) at its both ends in the longitudinal direction, **characterized in that** said method further comprises temporarily supporting the reflection mirror (4) on the temporary supporting member (24; 30) with its surface (4g) opposite to the beam reflection surface (4e) contacting the temporary supporting member (24; 30).

2. The method as claimed in claim 1, **characterized by** further comprising the step of forming a prescribed gap (D1, D2) between the reflection mirror (4) and the temporary supporting member (24; 30) when the beam reflection surface is set to the pair of holding members (22, 23).

3. The method as claimed in any one of claims 1 and 2, **characterized by** further comprising the step of holding the reflection mirror (4) with the beam reflection surface (4e) pressure contacting the pair of holding members (22, 23).

4. The method as claimed in any one of claims 1 to 3, **characterized in that** the temporary supporting member (24; 30) integrally protrudes from the housing (21).

5. The method as claimed in any one of claims 1 to 3, **characterized by** further comprising the step of detachably positioning the temporary supporting member (24; 30) independent from the housing (21) of the optical scanning device before the step of setting the reflection mirror (4).

6. The method as claimed in claim 5, **characterized by** further comprising the steps of:
moving the temporary supporting member (24; 30) into a reception hole (33) formed on the housing (21) from the setting position of the housing (21); and
disposing the temporary supporting member (24; 30) through the reception hole(33) after the step of setting the beam reflection surface to the pair of holding members (22, 23).

7. An optical scanning device comprising:
a reflection mirror (4) configured to deviate a scanning use light beam;
a pair of holding members (22, 23) configured to support the reflection mirror (4) at both ends of its reflection surface (4e) in a longitudinal direction; wherein
at least one temporary supporting member (24; 30) is positioned between the pair of the holding members (22, 23) and configured to temporarily hold the reflection mirror (4) , wherein the at least one temporary supporting member (24; 30) is separated from the reflection mirror (4) when the long reflection mirror is pressure contacted the pair of holding members (22, 23), **characterized in that** the at least one temporary supporting.member (24; 30) is configured to contact the surface (4g) opposite to the beam reflection surface (4e) before the reflection mirror (4) is set to the pair of the holding members (22, 23).

8. The optical scanning device as claimed in claim 7, **characterized in that** a gap (D1, D2) is formed between the reflection mirror (4) and the temporary supporting member (24; 30) when the reflection mirror (4) is set.

9. The optical scanning device as claimed in any one of claims 7 and 8, **characterized in that** a cross section of the temporary supporting member (24; 30) has a similar shape to that of a reception portion of the pair of holding member (22, 23) for receiving the reflection mirror (4) when the reflection mirror (4) is set to the pair of holding members (22, 23).

10. The optical scanning device as claimed in any one of claims 7 and 9 **characterized in that** the temporary supporting member (24; 30) includes an inclination surface contacting and inclining the reflection mirror (4) at a deviation angle of a scanning use light beam.

11. The optical scanning device as claimed in any one of claims 7 and 10, **characterized by** further comprising an elastic member (25) contacting the surface (4g) opposite to the beam reflection surface (4e) of the reflection mirror (4) and configured to bias the reflection mirror (4) toward the pair of holding members (22, 23):

12. The optical scanning device as claimed in any one of claims 7 and 10, **characterized in that** the temporary supporting member (24; 30) and the housing (21) are integral.

13. The optical scanning device as claimed in any one of claims 7 and 10, **characterized in that** the temporary supporting member (24; 30) is detachably attached to the housing (21), and wherein the housing (21) including a positioning member configured to position the temporary supporting member (24; 30) at a setting position of the housing (21).

14. The optical scanning device as claimed in claim 13, **characterized by** further comprising a reception hole (33) formed on the housing (21) and configured to allow the temporary supporting member (24; 30) to enter from the setting position when the temporary supporting member (24; 30) has been set to the pair of holding members (22, 23).

15. An image forming apparatus, **characterized by** comprising:
an optical scanning device configured to form a latent image to be developed on a photoconductive member;
a sheet feeding device configured to feed a transfer sheet to the photoconductive member (5); and
a transfer device configured to transfer the developed image onto the sheet;
wherein the optical scanning device employs the optical scanning device as claimed in any one of claims 7 to 14.

## Patentansprüche

1. Verfahren der Montage einer optischen Abtastvorrichtung bzw. Scannvorrichtung, das die folgenden Schritte aufweist:
Anordnen eines Paares von Haltegliedern (22, 23) in einem Gehäuse bzw. Gerüst (21) von der optischen Abtastvorrichtung bzw. Scannvorrichtung;
Anordnen eines temporären Trag- bzw. Stützgliedes (24) auf dem Boden bzw. der Unterseite des Gehäuses bzw. des Gerüstes zwischen dem Paar von Haltegliedern (22, 23);
temporäres Tragen bzw. Stützen eines Reflexions- bzw. Reflexspiegels (4) auf dem temporären Trag- bzw. Stützglied (24; 30);
Schieben bzw. Drängen des Reflexions- bzw. Reflexspiegels (4) aufwärts bzw. nach oben gerichtet in Richtung des Paars von Haltegliedern (22, 23) von dem temporären Trag- bzw. Stützglied (24; 30); und
Einstellen bzw. Justieren der Strahlreflexionsoberfläche bzw. Strahlrückstrahloberfläche (4e) des Reflexions- bzw. Reflexspiegels (4) zu dem Paar von Haltegliedern (22, 23) an seinen beiden Enden in der Längsrichtung, **dadurch gekennzeichnet, dass** das Verfahren ferner das temporäre Tragen bzw. Stützen des Reflexions- bzw. Reflexspiegels (4) auf dem temporären Trag- bzw. Stützglied (24; 30) aufweist, und zwar mit seiner Oberfläche (4g), die entgegengesetzt zu der Strahlreflexionsoberfläche bzw. Strahlrückstrahloberfläche (4e) ist, das temporäre Trag- bzw. Stützglied (24; 30) kontaktierend.

2. Verfahren wie in Anspruch 1 beansprucht, **gekennzeichnet durch** ferner aufweisend den Schritt des Bildens eines vorgeschriebenen Raumes bzw. Zwischenraumes (D1, D2) zwischen dem Reflexions- bzw. Reflexspiegel (4) und dem temporären Trag- bzw. Stützglied (24; 30), wenn die Strahlreflexionsoberfläche bzw. Strahlrückstrahloberfläche zu dem Paar von Haltegliedern (22, 23) eingestellt bzw. justiert ist.

3. Verfahren wie in irgendeinem der Ansprüche 1 und 2 beansprucht, **gekennzeichnet durch** ferner aufweisend den Schritt des Haltens des Reflexions- bzw. Reflexspiegels (4) mit der Strahlreflexionsoberfläche bzw. Strahlrückstrahloberfläche (4e) in Druckkontakt mit dem Paar von Haltegliedern (22, 23).

4. Verfahren wie in irgendeinem der Ansprüche 1 bis 3 beansprucht, **dadurch gekennzeichnet, dass** das temporäre Trag- bzw. Stützglied (24; 30) integral bzw. einstückig von dem Gehäuse bzw. Gerüst (21) vorsteht.

5. Verfahren wie in irgendeinem der Ansprüche 1 bis 3 beansprucht, **gekennzeichnet durch** ferner aufweisend den Schritt des abnehmbaren Positionierens des temporären Trag- bzw. Stützgliedes (24; 30) unabhängig von dem Gehäuse bzw. Gerüst (21) von der optischen Abtastvorrichtung bzw. Scannvorrichtung vor dem Schritt des Einstellens bzw. Justierens des Reflexions- bzw. Reflexspiegels (4).

6. Verfahren wie in Anspruch 5 beansprucht, **gekennzeichnet durch** ferner aufweisend die Schritte von:
Bewegen des temporären Trag- bzw. Stützgliedes (24; 30) in ein Aufnahme- bzw. Unterbringungsloch (33), das auf dem Gehäuse bzw. Gerüst (21) gebildet ist, und zwar von der Einstell- bzw. Justierposition des Gehäuses bzw. Gerüsts (21); und
Anordnen bzw. Wegschaffen des temporären Trag- bzw. Stützgliedes (24; 30) **durch** das Aufnahme- bzw. Unterbringungsloch (33), und zwar nach dem Schritt des Einstellens bzw. Justierens der Strahlreflexions- bzw. Strahlrückstrahloberfläche zu dem Paar der Halteglieder (22, 23).

7. Optische Abtastvorrichtung bzw. Scannvorrichtung, aufweisend:
einen Reflexions- bzw. Reflexspiegel (4), der konfiguriert ist, um einen Abtastverwendungslichtstrahl bzw. Scannverwendungslichtstrahl abzulenken;
ein Paar von Haltegliedern (22, 23), die konfiguriert sind, um den Reflexions- bzw. Reflexspiegel (4) an beiden Enden von seiner Reflexionsoberfläche bzw. Rückstrahloberfläche (4e) in einer Längsrichtung zu tragen bzw. zu stützen; wobei
wenigstens ein temporäres Trag- bzw. Stützglied (24; 30) zwischen dem Paar der Halteglieder (22, 23) positioniert ist, und konfiguriert ist, um den Reflexions- bzw. Reflexspiegel (4) temporär zu halten, wobei wenigstens ein temporäres Trag- bzw. Stützglied (24; 30) von dem Reflexions- bzw. Reflexspiegel (4) getrennt bzw. abgesondert ist, wenn der lange Reflexions- bzw. Reflexspiegel mit dem Paar von Haltegliedern (22, 23) in Druckkontakt ist, **dadurch gekennzeichnet, dass** das wenigstens eine temporäre Trag- bzw. Stützglied (24; 30) konfiguriert ist, um die Oberfläche (4g) zu berühren, die entgegengesetzt zu der Strahlreflexionsoberfläche bzw. Strahlrückstrahloberfläche (4e) ist, bevor der Reflexions- bzw. Reflexspiegel (4) zu dem Paar von den Haltegliedern (22, 23) eingestellt bzw. justiert wird.

8. Optische Abtastvorrichtung bzw. Scannvorrichtung wie in Anspruch 7 beansprucht, **dadurch gekennzeichnet, dass** ein Raum- bzw. Zwischenraum (D1, D2) zwischen dem Reflexions- bzw. Reflexspiegel (4) und dem temporären Trag- bzw. Stützglied (24; 30) gebildet ist, wenn der Reflexions- bzw. Reflexspiegel (4) eingestellt bzw. justiert ist.

9. Optische Abtastvorrichtung bzw. Scannvorrichtung wie in irgendeinem der Ansprüche 7 und 8 beansprucht, **dadurch gekennzeichnet, dass** ein Querschnitt des temporären Trag- bzw. Stützgliedes (24; 30) eine ähnliche Form zu der von einem Aufnahme- bzw. Unterbringungsabschnitt von dem Paar der Halteglieder (22, 23) zum Aufnehmen bzw. Empfangen des Reflexions- bzw. Reflexspiegels (4) hat, wenn der Reflexions- bzw. Reflexspiegel (4) zu dem Paar der Halteglieder (22, 23) eingestellt bzw. justiert wird.

10. Optische Abtastvorrichtung bzw. Scannvorrichtung wie in irgendeinem der Ansprüche 7 und 9 beansprucht, **dadurch gekennzeichnet, dass** das temporäre Trag- bzw. Stützglied (24; 30) eine Neigungsoberfläche enthält, die den Reflexions- bzw. Reflexspiegel (4) kontaktiert bzw. berührt und neigt, und zwar mit einem Abweichungs- bzw. Ablenkungswinkel von einem Abtastverwendungslichtstrahl bzw. Scannverwendungslichtstrahl.

11. Optische Abtastvorrichtung bzw. Scannvorrichtung wie in irgendeinem der Ansprüche 7 und 10 beansprucht, **gekennzeichnet durch** ferner aufweisend ein elastisches Glied (25), das die Oberfläche (4g) kontaktiert bzw. berührt, die entgegengesetzt zu der Strahlreflexionsoberfläche bzw. Strahlrückstrahloberfläche (4e) des Reflexions- bzw. Reflexspiegels (4) ist, und das konfiguriert ist, um den Reflexions- bzw. Reflexspiegel (4) in Richtung des Paars von Haltegliedern (22, 23) vorzuspannen.

12. Optische Abtastvorrichtung bzw. Scannvorrichtung wie in irgendeinem der Ansprüche 7 und 10 beansprucht, **dadurch gekennzeichnet, dass** das temporäre Trag- bzw. Stützglied (24; 30) und das Gehäuse bzw. Gerüst (21) integral bzw. einstückig sind.

13. Optische Abtastvorrichtung bzw. Scannvorrichtung wie in irgendeinem der Ansprüche 7 und 10 beansprucht, **dadurch gekennzeichnet, dass** das temporäre Trag- bzw. Stützglied (24; 30) abnehmbar an dem Gehäuse bzw. Gerüst (21) angebracht ist, und wobei das Gehäuse bzw. Gerüst (21) ein Positionierglied enthält, das konfiguriert ist, um das temporäre Trag- bzw. Stützglied (24; 30) an einer Einstell- bzw. Justierposition des Gehäuses bzw. Gerüsts (21) zu positionieren.

14. Optische Abtastvorrichtung bzw. Scannvorrichtung wie in Anspruch 13 beansprucht, **gekennzeichnet durch** ferner aufweisend ein Aufnahme- bzw. Unterbringungsloch (33), das auf dem Gehäuse bzw. Gerüst (21) gebildet ist und konfiguriert ist, um es dem temporären Trag- bzw. Stützglied (24; 30) zu ermöglichen, von der Einstell- bzw. Justierposition einzudringen, wenn das temporäre Trag- bzw. Stützglied (24; 30) zu dem Paar von Haltegliedern (22, 23) eingestellt bzw. justiert worden ist.

15. Bilderzeugungsvorrichtung, **gekennzeichnet durch** das Aufweisen:
einer optischen Abtastvorrichtung bzw. Scannvorrichtung, die konfiguriert ist, um ein latentes Bild zu erzeugen bzw. zu bilden, um auf einem fotoleitfähigen Glied entwickelt zu werden;
eine Blattzuführungsvorrichtung, die konfiguriert ist, um ein Übertragungsblatt zu dem fotoleitfähigen Glied (5) zuzuführen; und
eine Übertragungsvorrichtung, die konfiguriert ist, um das entwickelte Bild auf das Blatt zu übertragen;
wobei die optische Abtastvorrichtung bzw. Scannvorrichtung die optische Abtastvorrichtung bzw. Scannvorrichtung wie in irgendeinem der Ansprüche 7 bis 14 beansprucht, verwendet.

## Revendications

1. Procédé d'assemblage d'un dispositif de balayage optique, comprenant les étapes suivantes consistant à :
agencer une paire d'éléments de maintien (22, 23) dans un logement (21) du dispositif de balayage optique ;
agencer un élément de support temporaire (24) sur le fond du logement entre la paire d'éléments de maintien (22, 23) ;
supporter temporairement un miroir de réflexion (4) sur l'élément de support temporaire (24 ; 30) ;
pousser le miroir de réflexion (4) vers le haut vers la paire d'éléments de maintien (22, 23) à partir de l'élément de support temporaire (24 ; 30) ;
et
placer la surface de réflexion de faisceau (4e) du miroir de réflexion (4) vers la paire d'éléments de maintien (22, 23) à ses deux extrémités dans la direction longitudinale, **caractérisé en ce que** ledit procédé consiste en outre à supporter temporairement le miroir de réflexion (4) sur l'élément de support temporaire (24 ; 30) avec sa surface (4g) opposée à la surface de réflexion de faisceau (4e) en contact avec l'élément de support temporaire (24 ; 30).

2. Procédé selon la revendication 1, **caractérisé en ce qu'**il comprend en outre l'étape consistant à former un espace (D1, D2) prescrit entre le miroir de réflexion (4) et l'élément de support temporaire (24 ; 30) lorsque la surface de réflexion de faisceau est placée vers la paire d'éléments de maintien (22, 23).

3. Procédé selon l'une quelconque des revendications 1 et 2, **caractérisé en ce qu'**il comprend en outre l'étape consistant à maintenir le miroir de réflexion (4) avec la surface de réflexion de faisceau (4e) en contact par pression avec la paire d'éléments de maintien (22, 23).

4. Procédé selon l'une quelconque des revendications 1 à 3, **caractérisé en ce que** l'élément de support temporaire (24 ; 30) fait saillie intégralement du logement (21).

5. Procédé selon l'une quelconque des revendications 1 à 3, **caractérisé en ce qu'**il comprend en outre l'étape consistant à positionner de manière détachable l'élément de support temporaire (24 ; 30) de manière indépendante du logement (21) du dispositif de balayage optique avant l'étape de placement du miroir de réflexion (4).

6. Procédé selon la revendication 5, **caractérisé en ce qu'**il comprend en outre les étapes consistant à :
déplacer l'élément de support temporaire (24 ; 30) dans un trou de réception (33) formé sur le logement (21) à partir de la position de placement du logement (21) ; et
disposer l'élément de support temporaire (24 ; 30) à travers le trou de réception (33) après l'étape de placement de la surface de réflexion de faisceau vers la paire d'éléments de maintien (22, 23).

7. Dispositif de balayage optique comprenant :
un miroir de réflexion (4) configuré pour dévier un faisceau lumineux destiné au balayage ;
une paire d'éléments de maintien (22, 23) configurés pour supporter le miroir de réflexion (4) aux deux extrémités de sa surface de réflexion (4e) dans une direction longitudinale ; dans lequel
au moins un élément de support temporaire (24 ; 30) est positionné entre la paire des éléments de maintien (22, 23) et configuré pour maintenir temporairement le miroir de réflexion (4), dans lequel ledit au moins un élément de support temporaire (24 ; 30) est séparé du miroir de réflexion (4) lorsque le long miroir de réflexion est en contact par pression avec la paire d'éléments de maintien (22, 23), **caractérisé en ce que** ledit au moins un élément de support temporaire (24 ; 30) est configuré pour être en contact avec la surface (4g) opposée à la surface de réflexion de faisceau (4e) avant que le miroir de réflexion (4) soit placé vers la paire des éléments de maintien (22, 23).

8. Dispositif de balayage optique selon la revendication 7, **caractérisé en ce qu'**un espace (D1, D2) est formé entre le miroir de réflexion (4) et l'élément de support temporaire (24 ; 30) lorsque le miroir de réflexion (4) est placé.

9. Dispositif de balayage optique selon l'une quelconque des revendications 7 et 8, **caractérisé en ce qu'**une section transversale de l'élément de support temporaire (24 ; 30) a une forme similaire à celle d'une partie de réception de la paire d'éléments de maintien (22, 23) pour recevoir le miroir de réflexion (4) lorsque le miroir de réflexion (4) est placé vers la paire d'éléments de maintien (22, 23).

10. Dispositif de balayage optique selon l'une quelconque des revendications 7 et 9, **caractérisé en ce que** l'élément de support temporaire (24 ; 30) comprend une surface d'inclinaison en contact et inclinant le miroir de réflexion (4) selon un angle de déviation d'un faisceau de lumière destiné au balayage.

11. Dispositif de balayage optique selon l'une quelconque des revendications 7 et 10, **caractérisé en ce qu'**il comprend en outre un élément élastique (25) en contact avec la surface (4g) opposée à la surface de réflexion de faisceau (4e) du miroir de réflexion (4) et configuré pour solliciter le miroir de réflexion (4) vers la paire d'éléments de maintien (22, 23).

12. Dispositif de balayage optique selon l'une quelconque des revendications 7 et 10, **caractérisé en ce que** l'élément de support temporaire (24 ; 30) et le logement (21) sont d'un seul tenant.

13. Dispositif de balayage optique selon l'une quelconque des revendications 7 et 10, **caractérisé en ce que** l'élément de support temporaire (24 ; 30) est fixé de manière détachable au logement (21), et dans lequel le logement (21) comprend un élément de positionnement configuré pour positionner l'élément de support temporaire (24 ; 30) à une position de placement du logement (21).

14. Dispositif de balayage optique selon la revendication 13, **caractérisé en ce qu'**il comprend en outre un trou de réception (33) formé sur le logement (21) et configuré pour permettre à l'élément de support temporaire (24 ; 30) d'entrer à partir de la position de placement lorsque l'élément de support temporaire (24 ; 30) a été placé vers la paire d'éléments de maintien (22, 23).

15. Appareil de formation d'image, **caractérisé en ce qu'**il comprend :
un dispositif de balayage optique configuré pour former une image latente à développer sur un élément photoconducteur ;
un dispositif d'avance de feuille configuré pour avancer une feuille de transfert vers l'élément photoconducteur (5) ; et
un dispositif de transfert configuré pour transférer l'image développée sur la feuille ;
dans lequel le dispositif de balayage optique utilise le dispositif de balayage optique selon l'une quelconque des revendications 7 à 14.
